# EUROPEAN PATENT SPECIFICATION

(11) **EP 2 002 329 B1**
(45) Date of publication and mention of the grant of the patent: **19.12.2018**
(21) Application number: 07752929.5
(22) Date of filing: 12.03.2007
(51) Int. Cl.: G07C 5/08, G07C 5/00, G06F 7/00

(54) **VEHICLE EVENT RECORDER SYSTEMS AND NETWORKS HAVING INTEGRATED CELLULAR WIRELESS COMMUNICATION SYSTEMS**
SYSTEME ZUR AUFZEICHNUNG VON FAHRZEUGEREIGNISSEN SOWIE NETZWERKE MIT INTEGRIERTEN DRAHTLOSEN ZELLULAREN KOMMUNIKATIONSSYSTEMEN
SYSTÈMES ENREGISTREURS EMBARQUÉS DANS UN VÉHICULE AVEC SYSTÈMES DE COMMUNICATION SANS FIL INTÉGRÉS

(30) Priority: 16.03.2006 US 377167
(43) Date of publication of application: 17.12.2008
(73) Proprietor: Smartdrive Systems, Inc., San Diego, CA 92121 (US)
(72) Inventor: PLANTE, James, San Diego, CA 92121 (US)
(74) Representative: Bell, James
(86) International application number: PCT/US2007/006265
(87) International publication number: WO 2007/109010

(56) References cited:
- EP-A2- 1 170 697
- WO-A2-01/46710
- US-A1- 2003 028 298
- US-A1- 2003 028 298
- US-A1- 2005 065 716
- US-A1- 2006 095 175
- US-A1- 2006 247 833
- US-B1- 6 798 743

## Description

### TECHNICAL FIELD

The present invention relates to vehicle event recorder systems. More specifically, the present invention relates to vehicle event recorder systems having cellular wireless transceivers configured for coupling with wireless communication networks.

### BACKGROUND ART

Video surveillance systems are used to provide video records of events, incidents, and of other situation in locations of special interest. For example, retail banking offices are generally protected with video surveillance systems that provide video evidence in the event of robbery. While such video surveillance systems are typically used in fixed locations, mobile video surveillance systems are also commonly used today.

Certain video systems have been configured for use with automobiles, for example, with police cruisers. Because a police cruiser is frequently situated near the scene of an active crime, important imagery may be captured by video cameras installed on the police cruiser.

Activity of interest occurring near an automobile is not always associated with crime and criminals. Events to be recorded may occur in the proximity of an automobile, which are of interest for reasons unrelated to crime. For example, a traffic accident in which two cars collide may be valuable video evidence. Events and circumstances leading to the collision may be preserved to provide an accurate reconstruction of the accident and may be useful in determining cause, fault and liability. Therefore, the use of video systems related to automobiles is rapidly becoming a tool useful not only for fighting crimes, but also for the general protection of the public.

U.S. Patent No. 5,570,127 to Schmidt discloses a video recording system for a passenger vehicle, such as a school bus, having two video cameras, one providing an inside view of the bus and the other one providing a view of the traffic, a single recorder, and a system multiplexing the two cameras to the recording device at appropriate times. A switching signal determines which of the two video cameras communicates with the video recorder, so as to view passengers at certain times and traffic at other times.

U.S. Patent No. 5,586,130 to Doyle discloses a method and apparatus for detecting fault conditions in a vehicle data-recording device, in order to detect tampering or unauthorized access. The system includes vehicle sensors for monitoring one or more operational parameters of the vehicle. The fault detection technique contemplates storing a current time value at regular intervals during periods, in which the recording device is provided with a source of main power. US Patent No. 5,815,071 to Doyle discloses instead a method and apparatus for monitoring parameters of vehicle electronic control units.

U.S. Patent No. 5,815,093 to Kikinis discloses a computerized vehicle log, a vehicle accident recording system that employs a digital camera connected to a controller in nonvolatile memory, and an accident sensing interrupter. The oldest recorded images are overwritten by the newest images, until an accident is detected, at which time the memory is blocked from further overwrites to protect the more vital images that may include important information about the accident. In preferred embodiments, the system of the '093 patent includes a communication port for downloading stored images, after an accident, to a digital device capable of displaying the images. In particular, the '093 patent describes a wired download to a server having specialized image handling and processing software thereon.

U.S. Patent No. 6,002,326 to Turner discloses an antitheft device for an automotive vehicle having both an audible alarm and visual monitor system. Video monitor operators are responsible for monitoring and handling an emergency situation and informing an emergency station.

U.S. Patent No. 6,088,635 to Coz et al. discloses a vehicle accident video recorder, in particular, a railroad vehicle accident video recorder. In particular, the '635 patent teaches a method and a monitoring unit for recording the status of the railroad vehicle prior to a potential accident is presented. The monitoring unit continuously monitors the status of an emergency brake of the railroad vehicle and the status of a horn of the railroad vehicle. Video images are recorded and captured for a predetermined period of time after detecting that the emergency brake or horn blast has been applied as an event trigger.

U.S. Patent No. 6,185,490 to Ferguson discloses a video crash data recorder having a three-stage memory for recording and retaining information. This recorder is further equipped with serial and parallel connectors to provide instant on-scene access to accident data. The '490 patent also teaches on-site access to the data, and a wired connection in the form of a serial or parallel hardwire connectors. Other known vehicle event recorders provide for serial and parallel hardwire connections.

U.S. Patent No. 6,246,933 to Bague teaches a traffic accident data recorder and traffic accident reproduction system and method. Sensors for registering parameters related to vehicle operation include at least a vehicle mounted digital video camera and an audio recorder. A rewritable, nonvolatile memory stores processed operational parameters and video images and audio signals, which are provided by a microprocessor controller. Data is converted to a computer readable form and read by a computer, so that an accident can be reconstructed via the collected data.

U.S. Patent No. 6, 298, 290 to Abe et al. teaches a memory apparatus for vehicle information data. A plurality of sensors including a CCD camera, a speed sensor, a steering angle sensor, a brake pressure sensor, and an acceleration sensor are coupled to a control unit that passes information to a flash memory and a RAM memory subject to an encoder. The collected information travels through a video output terminal. The '290 patent illustrates another hardwire system and the importance placed by experts in the art on a computer hardware interface, partly because video systems are typically data intensive and wired systems have sufficient bandwidth sufficient for transferring large amounts of data.

U.S. Patent No. 6,333,759 to Mazzilli teaches a 360° automobile video camera system. A complex mechanical mount adjusts the viewing angle of a single camera, giving a 360° range for recording video inside and outside of an automotive vehicle.

U.S. Patent No. 6,389,339 to Just teaches a vehicle operation monitoring system and method. Operation of the vehicle is monitored with an onboard video camera linked to a radio transceiver. A monitoring service includes a cellular telecommunication network to enable viewing video data received from the transceiver at a home-base computer. The system of the '339 patent is aimed at parental monitoring of adolescent driving. The mobile modem is designed for transmitting live video information into the network as the vehicle travels.

U.S. Patent No. 6,411,874 to Morgan et al. discloses an advanced law enforcement and response technology, in which a central control system affords intuitive and easy control of numerous subsystems associated with a police car or other emergency vehicle. This highly integrated system includes advanced control apparatus that drive a plurality of detector systems, including video and audio systems distributed about the vehicle. A primary feature in the device of the '874 patent includes an advanced user interface and display system, which provides for high level driver interaction with the system.

U.S. Patent No. 6,421,080 to Lambert teaches a digital surveillance system with pre-event recording. Pre-event recording is important in accident recording systems, because recording of the accident generally happens after the accident has occurred. A first memory is used for temporary storage, and images are stored in the temporary storage continuously until a trigger is activated that indicates an accident has occurred, at which time images are transferred to a more permanent memory.

U.S. Patent Nos. 6,389,340, 6,405,112, 6,449,540, and 6,718,239 to Rayner teach systems that include cameras for automobiles capturing video images, both forward- and rear-looking, and for storing recorded images locally on a mass storage system. At the end of the vehicle service day, an operator puts a wired connector into a device port and downloads information into a desktop computer system having specialized application software, so that the images and other information can be played-back and analyzed with a highly integrated user display interface.

In the systems of the Rayner patents, an administrative operator cannot manipulate at an off-site location or otherwise handle the captured data without human intervention. A download operator must transfer data captured by the recorder unit device to a disconnected computer system. While proprietary 'DriveCam' files according to the Rayner patents can be e-mailed or otherwise transferred through the Internet, those files are in a format with a can only be processed and read by desktop software installed on a remote computer. Therefore, data captured by the vehicles is unavailable to certain parties without the specialized software that may have an interest in the data. A second and major disadvantage is of the Rayner systems is that a human operator must service the equipment each day with a manual download action.

Automobile systems having a wireless communication link component also are known.

U.S. Patent No. 6,459,988 to Fan et al. teaches methods and systems for detecting vehicle collision using a global positioning system (GPS). A GPS receiver is combined with wireless technology to automatically report an accident to a remotely located third party. A system uses the GPS signals to determine when an acceleration value exceeds the preset threshold, which is meant to be indicative of an accident having occurred.

U.S. 6,862,524 to Nagda et al. teaches systems for determining and disseminating traffic information or route information using location data. Traffic information is collected from mobile units that provide their location or position information and route information may be utilized to determine whether a mobile unit is allowed or prohibited from traveling along a certain route. Related systems are disclosed in U.S. Patent Nos. 6,529,159; 6,552,682; 6,594,576; 6,664,922; 6,795,017; 6,832,140; 6,867,733; 6,882,313, and 6,922,566, all assigned to @Road Inc.

U.S. Patent No 6,728,612 to Carver et al. discloses an automated telematics test system and method, in which a telematics system in a mobile vehicle provides for a test command from a test center to be made to a call center according to a test script. The mobile vehicle is continuously in contact by way of cellular communication networks with a remotely located host computer.

U.S. Patent No. 6,947,817 to Diem discloses a nonintrusive diagnostic tool for sensing oxygen sensor operation that includes a scheme or an oxygen analyzer deployed in a mobile vehicle communicating by way of an access point to a remotely located server. A diagnostic heuristic is used to analyze the data and confirm proper operation of the sensor. An analysis may be performed by a mainframe computer based on data received from the oxygen sensor.

Relationships between mobile vehicles and remote host computers have also been disclosed in US Patent Nos. 6,735,503; 6,739,078; 6,760,757; 6,810,362; 6,832,141; and 6,850,823.

U.S. Patent No. 6,928,348 to Lightner et al. discloses Internet based emission tests that are performed on vehicles having special wireless couplings to computer networks. Data may be transferred to entities of particular interest including the EPA or the California Air Resources Board, or to certain insurance companies and other organizations concerned with vehicle emissions and with the environment.

Other disclosures in the prior art relate to reporting automobile performance parameters to remote servers via wireless links. In these disclosures, an onboard data bus in an on board diagnostic (OBD) system is coupled to a microprocessor through a standard electrical connector. The microprocessor periodically receives data and transmits that data through the wireless communication system. For example, U.S. Patent No. 6,636,790 to Lightner et al. discloses methods and apparatus for remotely characterizing vehicle performance. OBD data is periodically received by a microprocessor and passed into a local transmitter at predetermined time intervals. Therefore, the '790 patent and related prior art does not provide for the processing and analyzing of data other than at the predetermined time periods. US Patent No. 6,732,031 to Lightner et al. also describes systems, in which where motor vehicles are coupled by wireless communication links to remote host servers.

U. S. Patent No. 6,947,817 to Diem discloses nonintrusive diagnostic tools for testing oxygen sensor operation with a diagnostic system. Such system includes a wireless communication link between a vehicle and a remote network of server computers. In particular, a WiFi type access points enables an analyzer to communicate through the Internet with a server computer hosting an oxygen sensor simple object access protocol (SOAP) service. With the system of the '817 patent, smog sensors for automobiles communicate with remote servers through a WiFi communication link.

Further, US2003/028298 A1 discloses a mobile vehicle accident data system; US 2005/065716 A1 discloses a multimode in-vehicle control unit with network sensitivity; and EP 1 170 697 A2 discloses a monitoring system.

### DISCLOSURE OF THE INVENTION

It is an aspect of the present invention to provide improved systems for managing a fleet of vehicles.

It is another aspect of the present invention to provide a vehicle fleet management system that includes a video component.

It is still another aspect of the present invention to provide a vehicle fleet management system connected to a mobile network having high performance connectivity and functionality.

It is still another aspect of the present invention to provide a video based vehicle fleet management system coupled to an ubiquitous, always-on mobile wireless network.

It is still another aspect of the present invention to provide a video based vehicle fleet management system coupled to a cellular type wireless network.

The present invention relates to a vehicle event recorder system according to claim 1 that includes integrated cellular wireless communication links. Such system may include one or more video event recorders, such as video cameras, microprocessors, memories, parsing modules, and mobile wireless communication transceivers. Further, such systems may communicate with a mobile wireless base station, a gateway, the Internet, and a remote application specific server.

In one embodiment, a vehicle event recorder system includes one or more imaging devices configured to collect imagery of scenes in the vehicle and in the environment surrounding the vehicle, in order to monitor vehicle use and to collect other vehicle performance and use data. The data collected and preserved by a system according to the present invention relate to a particular moment in time, or to an "event," and to time intervals before and after the event.

In another embodiment, a detailed or "complete" set of collected data is parsed, compressed and reduced into a data subset of limited size. Thus, an "abbreviated" dataset is formed, which is a data subset that may be transmitted more easily on limited bandwidth systems. While the abbreviated dataset is passed into the network in near real time, a complete dataset may be preserved locally for transmission at a later time when a higher bandwidth link becomes available.

Vehicle event recorder systems according to embodiments of the present invention may be deployed with wireless mobile telephone type communication networks. Video cameras, vehicle systems transducers, and other measurement systems associated with vehicle use collect data during use of the vehicle. Upon occurrence of an event, for example, a traffic accident, data is captured and preserved in a specific onboard memory, and a parsing module may extract the most relevant information, which may be stored as a dataset of reduced size.

### BRIEF DESCRIPTION OF THE DRAWINGS

The above and other aspects and advantages of the present invention will be apparent upon consideration of the following detailed description, taken in conjunction with the accompanying drawings, in which:
Figure 1 illustrates a schematic diagram of a vehicle event recorder system that includes a vehicle event recorder in relation with a compound network;
Figure 2 illustrates a diagram that provides details on memory management in systems according to the present invention;
Figure 3 illustrates a block diagram related to versions of systems according to the present invention that include special interfaces between some primary system elements;
Figure 4 illustrates some relevant secondary elements in systems according to the present invention; and
Figure 5 illustrates a block schematic view of specially arranged authentication clients/servers.

### MODES FOR CARRYING OUT THE INVENTION

Detailed descriptions of embodiments of the invention are provided herein. It is to be understood, however, that the present invention may be embodied in various forms. Therefore, the specific details disclosed herein are not to be interpreted as limiting, but rather as a representative basis for teaching one skilled in the art how to employ the present invention in virtually any detailed system, structure, or manner.

Throughout the present disclosure, reference is made to certain terms of art. Definitions provided hereinbelow should not be interpreted as limiting, but as representative to assist the reader in a better understanding of the invention.

Cellular Wireless Communication Network: A wireless network having an area of coverage divided into cells and including handoff mechanisms for nodes connecting one cell to another, so to maintain a continuous connection.

Gateway: A coupling system used for interfacing two independent systems, whereby a protocol used on a first system is translated into a protocol used on a second system.

Managed Loop Memory: A memory system preserving in detail data captured during a period immediately past any moment in time but overwriting older data with newer data when the older data has sufficiently aged in accordance with a predefined expiration definition.

Vehicle Environment: The environment in and about a vehicle, inclusive of those spaces inside or outside the car body. This includes traffic ahead of, behind, towards the sides of, and inside the driver compartment.

Communication Port: A port that includes, among others, a cellular transceiver; WiFi; a network interface card; and a serial port such as RS-232.

Embodiments of the present invention include vehicle event recorders integrated within cellular wireless communication systems, for example, vehicle event recorders coupled with mobile telephone communication networks, the Internet, and special application-specific servers and databases. In one embodiment, a vehicle event recorder includes a video camera, a mobile wireless type radio transceiver and a microprocessor. The video camera is configured to have a field of view that includes environments around the vehicle in which the recorder is installed, typically a forward-looking field of view and sometimes a vehicle driver compartment field of view. The video camera runs continuously while the vehicle is in use, capturing images of scenes occurring about the vehicle. In the event of a traffic accident or of some other physical anomaly, frames from before and after the accident are captured by way of a unique memory management system.

A microprocessor is electronically coupled to a mobile telephone transceiver, so to transmit and receive data to/from the network. The transceiver may couple with a remote server running application specific software and converts electronic signals from the microprocessor into electromagnetic signals for free space transmission. These electromagnetic signals are received at a base station belonging to spatially distributed cells within the wireless communication system and are then converted back into electronic signals, which may be further transmitted via packet networks to remote servers for additional analysis and processing.

Vehicle event recorder arrangements connected to wireless communication networks have been suggested in in the prior art. Those systems are limited with regard to the space in which download actions can be executed. In those systems, a vehicle is put in service as planned and thereafter returns to a download location, that is, enters a specifically configured space, causing the vehicle to be near to a WiFi transceiver base station or "access point." Such proximity condition is detected, and in response to detection of the proximity condition, a data transfer action causes data to be transmitted to the remote server. These systems require a vehicle to return to an approved download space, so that an authorized network connection can be made, while data cannot be transferred while the vehicle is in the planned service.

In systems according to the present invention, a vehicle is maintained in continuous contact with the remote server while it is in use over extremely large regions by coupling a vehicle event recorder to a remoter server via links arranged within a wireless cellular communication network. Such a network is different from wireless networks in the prior art, because a plurality of cooperating base stations are included that are appropriately distributed to provide continuous coverage over an extended area. A plurality of transmitters, each spatially removed from another and each having a communication range that partially overlaps with the communication range of at least one other transmitter, define a coverage space, the extent of which is at least of a few tens of cubic kilometers. A further distinction with regard to WiFi wireless systems that may include a plurality of transmitters connected to form a single network is that cellular networks, more specifically those arranged as mobile telephone systems, include special handoff mechanisms, by which a mobile transceiver passing from one cell to another maintains a seemingly continuous connection. Accordingly, the coverage space in which a connection may be maintained can extend over several hundreds of square kilometers.

To further improve range, wireless systems arranged as cellular networks use electromagnetic radiation of specific frequencies and specialized antennae suitable for long-range transmissions. Electromagnetic signals are arranged, both in frequency and protocol, to cooperate with common mobile telecommunication networks; for example, these signals may be arranged in the frequency band between about 750 MHz and 2000 MHz. Some common cellular networks are built about frequency bands having a center frequency at 900 MHz or 1800MHz. For example, in a GSM network, the frequency band is divided into 124 carrier frequencies, or sub-bands, spaced 200 kHz apart in a frequency division multiple access FDMA scheme. Each sub-band may be further divided into a time-sharing scheme, or TDMA time division multiple access system.

Because vehicle event recorder systems and their use in fleet vehicles require network connections that can be maintained continuously over large ranges, the combination of a vehicle event recorder head with a cellular type wireless network should be viewed as particularly beneficial and synergistic, providing benefits that include uninpterrupted communication between a remote server and a vehicle during a service day. At the same time, the bandwidth of wireless cellular networks may be inadequate to support the upload of a high-resolution real-time video from an in-vehicle system. Accordingly, means may be provided for forming datasets of reduced size, which may be more readily transmitted over limited bandwidth networks such as common wireless cellular networks.

In one embodiment, a vehicle event recorder head includes a local memory managed with an overwrite scheme that discards data of low value while preserving data of high value for transmission to the remote server. In other embodiment, a complete dataset may be abbreviated, with the abbreviated portion subject to instant transmission and the complete dataset subject to non real-time transmission but to a delayed transmission at a time when network resources become more available. Thus, a high priority dataset and a lower priority dataset may be formed in conjunction with a single event. The high priority dataset is of limited or reduced size and subject to instant transmission, while the low priority dataset may be considerably larger but more prone to a transmission delay.

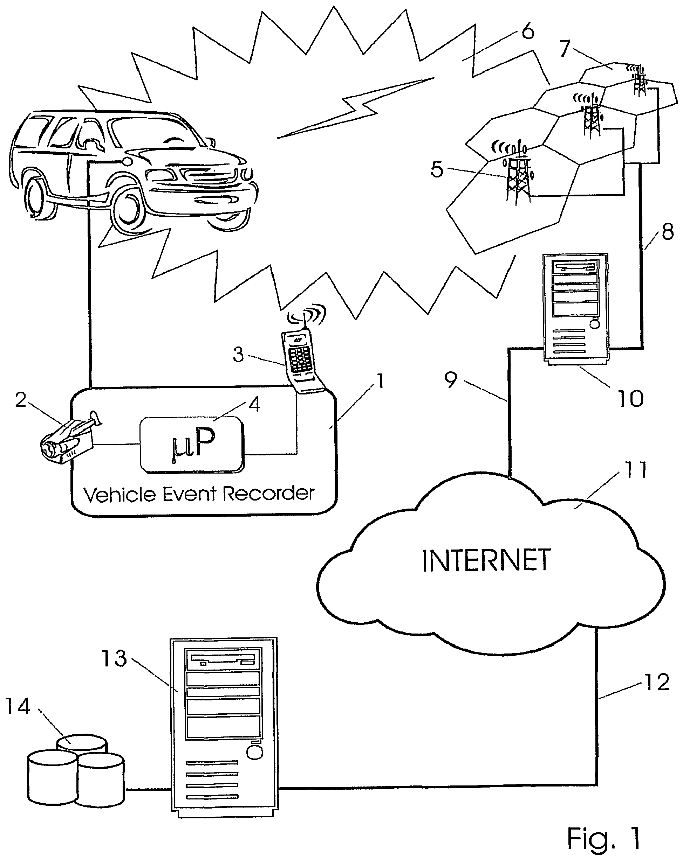

These concepts and others will be more readily understood in view of the following discussion with reference to Figures 1 through 5. More particularly, the diagram of Figure 1 illustrates a vehicle event recorder system in a schematic layout. A vehicle event recorder head 1 includes as primary elements a video camera 2, a wireless communication transceiver 3, and a computer microprocessor 4. These elements may be arranged in a common housing and may be mounted in a convenient location of a vehicle, for example, in the interior, near the dashboard behind the windshield. The combination including a video camera, a processor, and a mobile wireless communication link, packaged as a single unit suitable for integration with the vehicle, is sometimes and herein called a "vehicle event recorder head" or the "head unit."

So long as the vehicle remains within the coverage space of the cellular network, images collected by the video camera may be processed by the microprocessor and transmitted through the cellular network to remote servers. A distribution of various cellular base stations 5 forms a coverage space 6, which may extend for tens of cubic kilometers. A plurality of these base stations operates in conjunction with one another by way of handoff mechanisms to form cellular arrangement 7. A vehicle passing from one cell to another cell seamlessly transfers communication from a first base station to a second base station without ever losing connection 8 to the network. Accordingly, data from a vehicle event recorder may be continuously transferred into the network even at times when a vehicle passes from a first cell to a second cell. Thus, very large areas of continuous coverage are provided, such that a vehicle event recorder mounted in a vehicle is in continuous contact with a remote server throughout the service day. Such advantage is available in wired or fixed wireless systems due to their limited ranges.

This type of architecture includes a protocol translator between the communication protocols of wired networks and the communication protocols employed on mobile wireless networks. Thus, the vehicle event recorder system according to the present invention may be considered as including a compound communication network comprised of a wireless side 8 and a wired side 9 with a protocol translator or "gateway" 10 therebetween. Further, these compound networks may also include the Internet 11, with a connection 12 to remote server 13 and also to a mass storage database 14.

A person skilled in the art will appreciate that a high-resolution video camera generates far too much data than what can be transmitted in real-time over a common wireless mobile cellular communication network. For this reason, in some embodiments a memory system be adopted, in which a high-resolution video can be collected and preprocessed before transmission over the wireless link. In one embodiment, a managed loop memory is arranged to receive video frames while simultaneously discarding older frames in accordance with a strategy that preserves most valuable data. Since only "most valuable" data are transmitted, a limited communication link is not completely consumed by an unprocessed video stream.

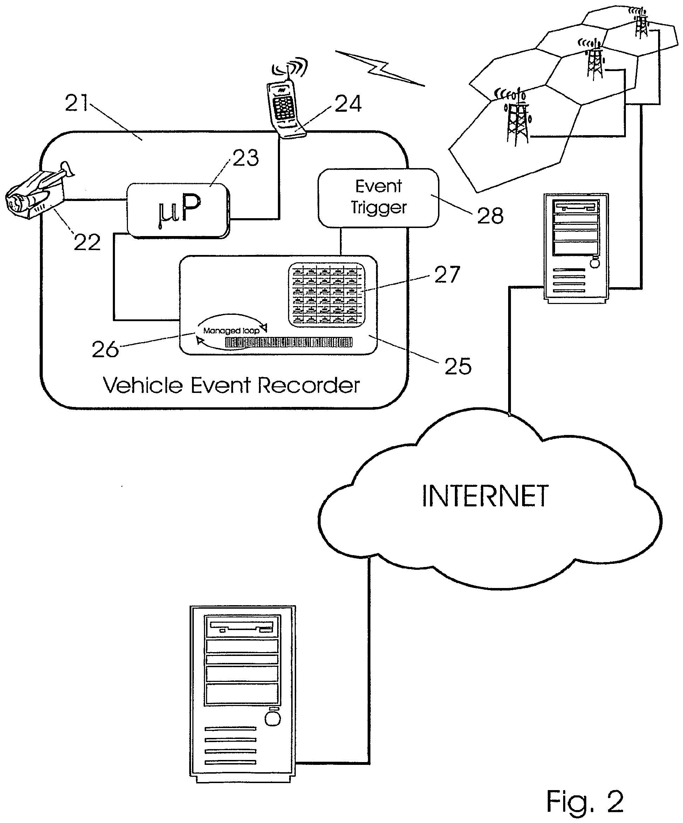

Referring now to Figure 2, a vehicle event recorder head 21 includes a video camera 22, a microprocessor 23, a wireless mobile communication transceiver 24, and an advanced two-stage memory 25 that includes a managed-loop memory 26 and a flash-type memory buffer 27. Although video is continuously captured by the video camera and transferred to the managed loop memory , only upon a toggle action of the event trigger 28 is data transferred from the loop memory to the flash memory buffer. The data set that is transferred to the flash memory buffer may be considerably reduced in size when compared to an unprocessed continuous video stream. One may gain a further appreciation of these memory management arrangements by referring to the U.S. Patent Application S/N 1 1/296,907.

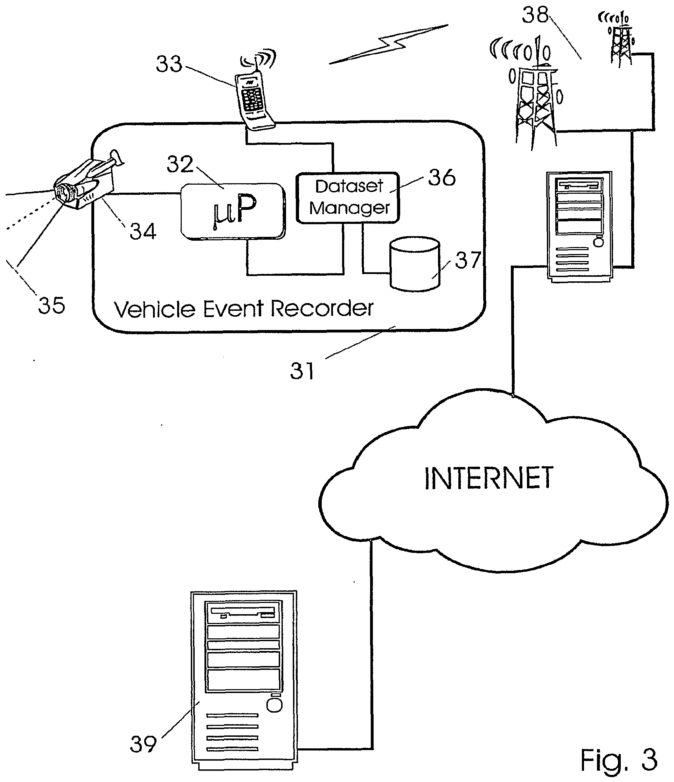

While the above described memory management techniques are included in certain embodiments, other schemes might be usefully deployed to reduce a continuous data stream collected by a video camera to an abbreviated dataset more suitable for transmission over limited bandwidth communication links. An example of an alternative scheme is depicted in Figure 3. A vehicle event recorder head 31 includes a microprocessor 32, a communication transceiver 33, a video camera 34 having field of view 35, a dataset manager 36, and a mass data storage buffer 37. The dataset manager is arranged to receive video data and to process received data to produce an abbreviated dataset, which contains a reduced amount of data in comparison to a data heavy continuous video stream. Once a dataset manager produces an abbreviated dataset in the vehicle event recorder head, that abbreviated dataset may be transmitted by mobile communication transceiver 33 into the cellular network 38, and further through a wired network and to remote server 39.

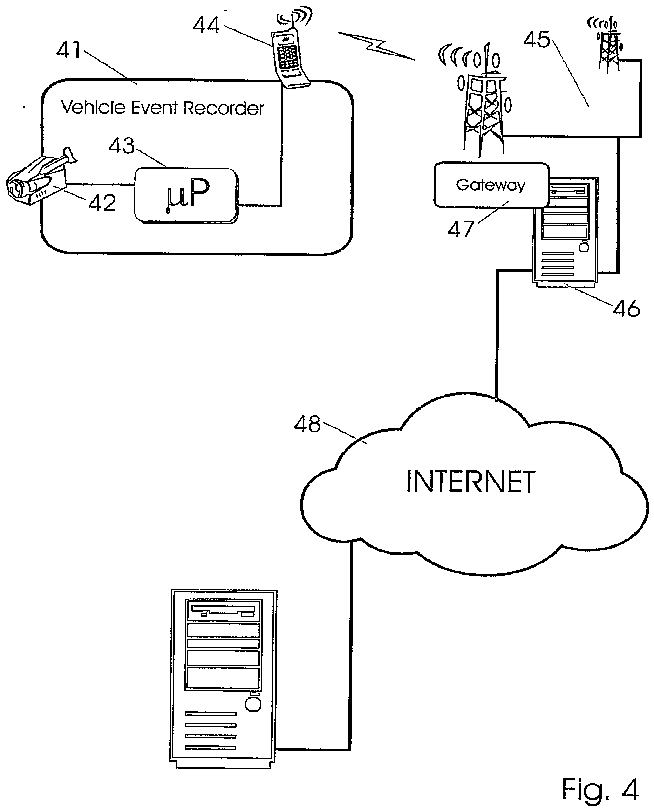

Figure 4 illustrates a system having a gateway protocol translator between a wired portion and a wireless portion of a compound communication network. A vehicle event recorder head 41 includes video camera 42, microprocessor 43, and cellular transceiver 44. The cellular transceiver 44 may transmit and receive data messages in accordance with protocols used with wireless cellular networks such as WCDMA, EvDO, GPRS, EDGE, PCS, CDMA, and GSM, among others. Due to the specific physical nature of cellular communication networks, certain transmission protocols are required. At the same time, wired networks have different characteristics, and thus different transmission protocols are used with those networks. When a compound network is formed of a wireless portion and a wired portion, a system must be put in place to translate from one protocol to another and perform the reverse operation for data traffic going in an opposing direction. This protocol translator is sometimes and herein called a "gateway."

Wireless cellular network 45 may include a base station 46, which may include special gateway module 47 arranged to translate protocols associated with wireless networks into protocols used more commonly with wired networks such as the Internet 48. High speed wired type networks most commonly deploy transmission protocols such as those that include TCP/IP, UDP, XML, and HTML data exchange formats, among others. Accordingly, a vehicle event recorder system according to they present invention may include a vehicle event recorder head in communication with a compound network having a wireless portion and a wired portion coupled together by way of a protocol gateway. In certain embodiments, the wireless portion of these networks is arranged as a cellular mobile wireless network commonly used with mobile telephones. In certain embodiments, the wired portion of the network includes the Internet, which supports a remote location and provides widely available access to a system server.

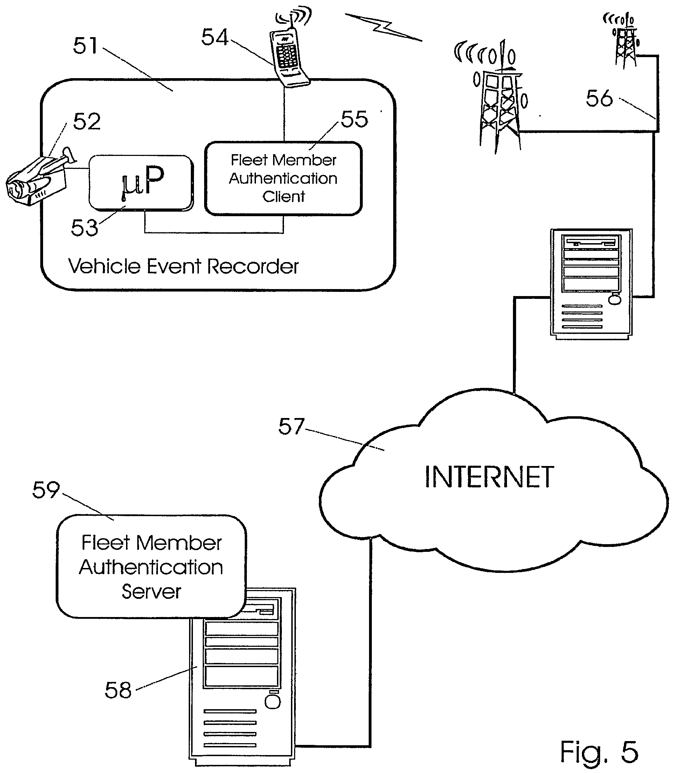

As video event recorder systems are primarily directed to vehicle fleet management strategy, fleet member authentication client and server modules may be included as part of a vehicle event recorder head and remote server respectively. A fleet member authentication client is a module which provides handshaking and identification functionality, such that a particular vehicle event recorder associated with a particular vehicle, or vehicle and user/driver, can present itself as such to the fleet member authentication server module. Accordingly, a single remote server may be in communication with a plurality of vehicles and groups of vehicles all associated with a particular vehicle fleet. The remote server can thereafter manage event data received from various vehicles and sort that data as part of the particular fleet, and further manage access to the data with regard to a particular fleet administrator. Figure 5 shows vehicle event recorder head 51, which includes video camera 52, microprocessor 53, and wireless transceiver 54. In addition, vehicle event recorder head 51 is integrated with a fleet member authentication client module 55. When in communication with a remote server, the authentication module presents an identity scheme, which is transmitted by cellular network 56 and further by wired network 57. The remote server 58 is integrated with a fleet member authentication server module 59. Calls from specific vehicle event recorders are received by the server and processed in accordance with their association with a specific fleet known to the server.

While in general a vehicle event recorder head is arranged to automatically connect wirelessly to the network in response to an event trigger, other actions may trigger a data transfer. One such action may be remote from the vehicle event recorder head, when a system administrator initiates a request for information from a particular vehicle while the vehicle is operating in the field. The request is transmitted from the remote server and hits the vehicle event recorder head to trigger a data transfer in agreement with the request. The request may be for a "present instant" dataset, generated at a vehicle event recorder head in real-time. Alternatively, the request may be for a dataset associated with a prior moment in time; that dataset having been stored in a local memory. In either case, these systems are meant to include data-transfer actions and are initiated by an administrator operating from a remote server station or other remote location.

In some embodiments of the invention, data transmission is throttled according to network congestion. When a wireless cellular telephone network is very busy, the system resources should be allocated to applications that require real-time data exchange. For example, a voice conversation is a real-time application that requires receipt of data without delay. In most instances, data collected by a vehicle event recorder is not compromised if it is received at a remote server with some reasonable delay. Accordingly, these embodiments provide for the vehicle event recorder head to be responsive in its data transmission activity as directed from an indicator provided by the network, the indicator being indicative of network capacity or network congestion. This function, among others, may be taken up at a dataset manager.

While an "Internet server" is a general purpose server that can provide hosting and HTML response services to any requesting agent, the servers described herein are not general purpose Internet servers. Instead, these servers include application-specific code, structured to support a vehicle event recorder system. That is to say, servers are predefined in their function to be responsive to calls made by cooperating vehicle event recorder heads, which have an a priori knowledge of the existence of the server and of the functions enabled therein. Thus, recognizable, proprietary calls and responses may be exchanged between an authorized vehicle event recorder head and a remote server suitable for receiving calls from those authorized vehicle event recorders.

A related function includes authentication services. In certain embodiments of the invention, only authorized vehicle event recorder units may be allowed to communicate with specific servers arranged to receive their communication. Thus, both servers and vehicle event recorders are arranged with authentication modules. An authentication client is part of a vehicle event recorder unit, and an authentication server is part of the remote server suite of functionality. Special relationships are formed between the vehicle event recorders and the associated remote servers. As a consequence, special fleet administration including fleet messaging may be established. Vehicle event recorders may operate in groups of cooperating units, these groups having further associations with entities such as business divisions or other logical groupings.

One benefit of the invention is the coupling of highly mobile vehicle event recorders to remote servers by way of wireless cellular communication networks, so to provide continuous links over extended communication spaces. While the invention has been described in connection with the above described embodiments, it is not intended to limit the scope of the invention to the particular forms set forth, but on the contrary, it is intended to cover such alternatives, modifications, and equivalents included within the scope of the appended claims. Further, the scope of the present invention is limited only by the appended claims.

## Claims

1. A vehicle event recorder (1, 21, 31, 41, 51) comprising:
a video camera (2, 22, 34, 42, 52);
a microprocessor (4, 23, 32, 43, 53);
a wireless communication transceiver (3, 24, 33, 44, 54) configured to wirelessly transmit information via a cellular communication network (38, 45, 56);
a managed loop memory (26) configured to electronically store information;
a buffer memory (27) configured to electronically store information; and
a server computer (13, 39, 58);
wherein the video camera (2, 22, 34, 42, 52) has a field-of-view (35) including an environment about a vehicle, and has an electronic output coupled to the microprocessor,
wherein the microprocessor (4, 23, 32, 43, 53) is electronically coupled to the wireless communication transceiver, enabling image data captured by the video camera (2, 22, 34, 42, 52) to be transmitted via electromagnetic radiation to the cellular communication network,
the microprocessor (4, 23, 32, 43, 53) configured to:
effectuate storage of the image data in the managed loop memory (26);
responsive to a physical anomaly event trigger, transfer the image data electronically stored by the managed loop memory to the buffer memory in detailed complete dataset that corresponds to the physical anomaly event trigger;
compress the detailed complete dataset into an abbreviated dataset, compressing including parsing the detailed complete dataset such that the abbreviated dataset comprises less bytes of data than the detailed complete dataset,
effectuate storage of the abbreviated dataset in the buffer memory; and
facilitate wireless transmission of the detailed complete dataset and the abbreviated dataset via the wireless communication transceiver based on an amount of available bandwidth in the cellular communication network,
wherein the microprocessor is configured to facilitate transmission of the abbreviated dataset responsive to the amount of available bandwidth being sufficient to permit transmission of the abbreviated dataset in real-time or near real-time, and
wherein the microprocessor (4, 23, 32, 43, 53) is configured to facilitate transmission of the detailed complete dataset responsive to the amount of available bandwidth being sufficient to permit transmission of the detailed complete dataset such that the detailed complete dataset is transmitted responsive to the amount of available bandwidth being sufficient for transmission of the detailed complete dataset;
wherein the cellular communication network is coupled with the server computer, and
wherein the server computer (13, 39, 58) further comprises vehicle event recorder application specific software.

2. The vehicle event recorder (1, 21, 31, 41, 51) of claim 1, wherein the managed loop memory (26) stores video series images associated with a specific moment in time, and wherein the video series images include images captured prior to and after the specific moment in time, the specific moment in time corresponding to a given physical anomaly event trigger.

3. The vehicle event recorder (1, 21, 31, 41, 51) of claim 1, further comprising a download module configured to direct transmission of the image information including the detailed complete dataset and the abbreviated dataset via the wireless communication transceiver.

4. The vehicle event recorder (1, 21, 31, 41, 51) of claim 3, wherein the download module includes a throttle responsive to a network availability measure, and wherein downloads are throttled in agreement with predetermined network availability conditions.

5. The vehicle event recorder (1, 21, 31, 41, 51) of claim 1, further comprising a fleet member authentication client, wherein the fleet member authentication client is configured to transact authentication procedures with a remote server, and wherein only authorized connections are allowed.

## Patentansprüche

1. Fahrzeugereignisaufzeichnungsgeräte-(1, 21, 31, 41, 51), umfassend:
eine Videokamera (2, 22, 34, 42, 52),
einen Mikroprozessor (4, 23, 32, 43, 53),
einen drahtlosen Kommunikations-Sendeempfänger (3, 24, 33, 44, 54), der dazu ausgestaltet ist, Informationen drahtlos über ein Mobilfunkkommunikationsnetz (38, 45, 56) zu übertragen,
einen Managed-Loop-Speicher (26), der dazu ausgestaltet ist, Informationen elektronisch zu speichern,
einen Pufferspeicher (27), der dazu ausgestaltet ist, Informationen elektronisch zu speichern, und
einen Server-Computer (13, 39, 58),
wobei die Videokamera (2, 22, 34, 42, 52) ein Sichtfeld (35) aufweist, das eine Umgebung um ein Fahrzeug beinhaltet, und einen elektronischen Ausgang aufweist, der mit dem Mikroprozessor gekoppelt ist,
wobei der Mikroprozessor (4, 23, 32, 43, 53) mit dem drahtlosen Kommunikations-Sendeempfänger elektronisch gekoppelt ist, wodurch ermöglicht wird, dass von der Videokamera (2, 22, 34, 42, 52) erfasste Bilddaten über elektromagnetische Strahlung an das Mobilfunkkommunikationsnetz übertragen werden,
wobei der Mikroprozessor (4, 23, 32, 43, 53) dazu ausgestaltet ist:
eine Speicherung der Bilddaten in dem Managed-Loop-Speicher (26) zu bewirken,
als Reaktion auf eine physikalische Anomalieereignisauslösung die im Managed-Loop-Speicher elektronisch gespeicherten Bilddaten an den Pufferspeicher als detaillierten vollständigen Datensatz, der der physikalischen Anomalieereignisauslösung entspricht, zu übertragen,
den detaillierten vollständigen Datensatz in einen abgekürzten Datensatz zu komprimieren, wobei Komprimieren ein Parsing des detaillierten vollständigen Datensatzes beinhaltet, sodass der abgekürzte Datensatz weniger Datenbytes umfasst als der detaillierte vollständige Datensatz,
eine Speicherung des abgekürzten Datensatzes im Pufferspeicher zu bewirken, und
eine drahtlose Übertragung des detaillierten vollständigen Datensatzes und des abgekürzten Datensatzes über den drahtlosen Kommunikations-Sendeempfänger basierend auf einer Menge an verfügbarer Bandbreite in dem Mobilfunkkommunikationsnetz zu ermöglichen,
wobei der Mikroprozessor dazu ausgestaltet ist, eine Übertragung des abgekürzten Datensatzes als Reaktion darauf zu ermöglichen, dass die Menge an verfügbarer Bandbreite ausreicht, um eine Übertragung des abgekürzten Datensatzes in Echtzeit oder nahezu in Echtzeit zuzulassen, und
wobei der Mikroprozessor (4, 23, 32, 43, 53) dazu ausgestaltet ist, eine Übertragung des detaillierten vollständigen Datensatzes als Reaktion darauf zu ermöglichen, dass die Menge an verfügbarer Bandbreite ausreicht, um eine Übertragung des detaillierten vollständigen Datensatzes zuzulassen, sodass der detaillierte vollständige Datensatz als Reaktion darauf, dass die Menge an verfügbarer Bandbreite für eine Übertragung des detaillierten vollständigen Datensatzes ausreicht, übertragen wird,
wobei das Mobilfunkkommunikationsnetz mit dem Server-Computer gekoppelt ist, und
wobei der Server-Computer (13, 39, 58) ferner spezifische Software für eine Fahrzeugereignisaufzeichnungsanwendung umfasst.

2. Fahrzeugereignisaufzeichnungsgeräte-(1, 21, 31, 41, 51) nach Anspruch 1, wobei der Managed-Loop-Speicher (26) eine Reihe von Videobildern speichert, die einem spezifischen Zeitpunkt zugeordnet sind, und wobei die Reihe von Videobildern Bilder enthält, die vor und nach dem spezifischen Zeitpunkt erfasst wurden, wobei der spezifische Zeitpunkt einer gegebenen physikalischen Anomalieereignisausläsung entspricht.

3. Fahrzeugereignisaufzeichnungsgerät (1, 21, 31, 41, 51) nach Anspruch 1, ferner umfassend ein Download-Modul, das dazu ausgestaltet ist, eine Übertragung der Bildinformationen, die den detaillierten vollständigen Datensatz und den abgekürzten Datensatz beinhalten, über den drahtlosen Kommunikations-Sendeempfänger zu steuern.

4. Fahrzeugereignisaufzeichnungsgerät (1, 21, 31, 41, 51) nach Anspruch 3, wobei das Download-Modul eine Drossel beinhaltet, die auf ein Maß der Netzverfügbarkeit anspricht, und wobei Downloads in Übereinstimmung mit vorbestimmten Netzverfügbarkeitsbedingungen gedrosselt werden.

5. Fahrzeugereignisaufzeichnungsgerät (1, 21, 31, 41, 51) nach Anspruch 1, ferner umfassend einen Fuhrparkmitgliedsauthentifizierungs-Client, wobei der Fuhrparkmitgliedsauthentifizierungs-Client dazu ausgestaltet ist, dass er Authentifizierungsprozeduren mit einem entfernten Server abwickelt und wobei nur autorisierte Verbindungen zulässig sind.

## Revendications

1. Enregistreur d'événement de véhicule (1, 21, 31, 41, 51) comprenant :
une caméra vidéo (2, 22, 34, 42, 52) ;
un microprocesseur (4, 23, 32, 43, 53) ;
un émetteur-récepteur de communication sans fil (3, 24, 33, 44, 54) configuré pour transmettre de manière sans fil des informations via un réseau de communication cellulaire (38, 45, 56) ;
une mémoire en boucle gérée (26) configurée pour stocker des informations électroniquement ;
une mémoire tampon (27) configurée pour stocker des informations électroniquement ; et
un ordinateur serveur (13, 39, 58) ;
dans lequel la caméra vidéo (2, 22, 34, 42, 52) a un champ de vision (35) incluant un environnement autour d'un véhicule, et a une sortie électronique couplée au microprocesseur,
dans lequel le microprocesseur (4, 23, 32, 43, 53) est couplé électroniquement à l'émetteur-récepteur de communication sans fil, permettant que des données d'image capturées par la caméra vidéo (2, 22, 34, 42, 52) soient transmises via un rayonnement électromagnétique au réseau de communication cellulaire,
le microprocesseur (4, 23, 32, 43, 53) configuré pour :
effectuer un stockage des données d'image dans la mémoire en boucle gérée (26) ;
en réponse à un déclencheur d'événement d'anomalie physique, transférer les données d'image stockées électroniquement par la mémoire en boucle gérée à la mémoire tampon dans un ensemble de données complet détaillé qui correspond au déclencheur d'événement d'anomalie physique ;
compresser l'ensemble de données complet détaillé en un ensemble de données abrégé, la compression incluant l'analyse de l'ensemble de données complet détaillé de sorte que l'ensemble de données abrégé comprenne moins d'octets de données que les ensembles de données complets détaillés,
effectuer un stockage de l'ensemble de données abrégé dans la mémoire tampon ; et
faciliter la transmission sans fil de l'ensemble de données complet détaillé et de l'ensemble de données abrégé via l'émetteur-récepteur de communication sans fil sur la base d'une quantité de largeur de bande disponible dans le réseau de communication cellulaire,
dans lequel le microprocesseur est configuré pour faciliter la transmission de l'ensemble de données abrégé en réponse au fait que la quantité de largeur de bande disponible soit suffisante pour permettre la transmission de l'ensemble de données abrégé en temps réel ou en temps quasi réel, et
dans lequel le microprocesseur (4, 23, 32, 43, 53) est configuré pour faciliter la transmission de l'ensemble de données complet détaillé en réponse au fait que la quantité de largeur de bande disponible soit suffisante pour permettre la transmission de l'ensemble de données complet détaillé de sorte que l'ensemble de données complet détaillé soit transmis en réponse au fait que la quantité de largeur de bande disponible soit suffisante pour la transmission de l'ensemble de données complet détaillé ;
dans lequel le réseau de communication cellulaire est couplé avec l'ordinateur serveur, et
dans lequel l'ordinateur serveur (13, 39, 58) comprend en outre un logiciel spécifique à une application d'enregistreur d'événement de véhicule.

2. Enregistreur d'événement de véhicule (1, 21, 31, 41, 51) selon la revendication 1, dans lequel la mémoire en boucle gérée (26) stocke des images de série vidéo associées à un moment spécifique, et dans lequel les images de série vidéo incluent des images capturées avant et après le moment spécifique, le moment spécifique correspondant à un déclencheur d'événement d'anomalie physique donné.

3. Enregistreur d'événement de véhicule (1, 21, 31, 41, 51) selon la revendication 1, comprenant en outre un module de téléchargement configuré pour diriger la transmission des informations d'image incluant l'ensemble de données complet détaillé et l'ensemble de données abrégé via l'émetteur-récepteur de communication sans fil.

4. Enregistreur d'événement de véhicule (1, 21, 31, 41, 51) selon la revendication 3, dans lequel le module de téléchargement inclut un brideur sensible à une mesure de disponibilité de réseau, et dans lequel des téléchargements sont bridés en accord avec des conditions de disponibilité de réseau prédéterminées.

5. Enregistreur d'événement de véhicule (1, 21, 31, 41, 51) selon la revendication 1, comprenant en outre un client d'authentification de membre de flotte, dans lequel le client d'authentification de membre de flotte est configuré pour effectuer des procédures d'authentification avec un serveur distant, et dans lequel seules des connexions autorisées sont admises.
